# EUROPÄISCHE PATENTSCHRIFT

(11) **EP 2 354 097 B1**
(45) Veröffentlichungstag und Bekanntmachung des Hinweises auf die Patenterteilung: **10.04.2013**
(21) Anmeldenummer: 10001065.1
(22) Anmeldetag: 02.02.2010
(51) Int. Cl.: C02F 3/22, F16L 3/22, B29C 41/06, B29C 41/04, B29C 41/08

(54) **Abpumpvorrichtung und Verfahren zu deren Herstellung**
Pumping device and method for its production
Dispositif de pompage et procédé destiné à sa fabrication

(43) Veröffentlichungstag der Anmeldung: 10.08.2011
(73) Patentinhaber: Otto Graf GmbH Kunststofferzeugnisse, 79331 Teningen (DE)
(72) Erfinder: Otto P., Graf, 79331 Teningen (DE)
(74) Vertreter: Spranger, Stephan

(56) Entgegenhaltungen:
- FR-A- 1 566 140
- GB-A- 124 903
- US-A- 2 864 317

## Beschreibung

Die Erfindung betrifft eine Abpumpvorrichtung nach dem Druckluftheberprinzip für eine Kläranlage zum Abpumpen von Flüssigkeit und/oder Schlamm mit einer Rohranordnung, mit zumindest in Flussrichtung einem ersten Steigrohr, einem ersten Senkrohr und einem zweiten Steigrohr, welche mit dem in Flussrichtung jeweiligen vorangehenden beziehungsweise folgenden Rohr über Rohrverbindungsbereiche in Fluidverbindung stehen gemäß dem Oberbegriff des Anspruchs 1 sowie ein Verfahren zur Herstellung einer solchen Abpumpvorrichtung gemäß dem Anspruch 10.

Generell können als Verrohrungen beispielsweise in Kleinkläranlagen, welche lokal zum Beispiel für Einfamilienhäuser Verwendung finden, Abpumpvorrichtungen nach dem Druckluftheberprinzip zum Einsatz kommen. Dabei werden aus den unterschiedlichen Behälterabteilungen solcher Kläranlagen teilweise auch größere Wasser-/Schlammmengen umgepumpt. Da die entsprechenden Verrohrungen teilweise bis auf den Boden solcher Behälter reichen, weisen diese Verrohrungen oft eine nicht unerhebliche Länge auf. Im Hinblick auf die zu fördemden Wasser-/Schlammmengen ist es dabei vonnöten, dass diese Verrohrungen eine ausreichende Stabilität für den Pumpbetrieb aufweisen. Ferner ist es wünschenswert, dass die Montage solcher Verrohrungen möglichst einfach und vor Ort auch rasch erfolgen kann, beispielsweise bei der ersten Montage oder im Fall einer Wartung der Anlage. Außerdem ist insbesondere bei Einzelkläranlagen für Einfamilienhäuser eine kompakte Bauweise der dortigen Verrohrung wünschenswert. Somit kann beispielsweise bei Kläranlagenlösungen, welche unterirdisch vorgesehen sind, eine einfache Ausrüstung und ein einfacher Einbau der Verrohrung über ein sogenanntes Mannloch von oben erfolgen.

Bisherige Verrohrungen von Abpumpvorrichtungen sind üblicherweise aus Einzelrohrelementen zusammengesetzt. Dies ist relativ aufwendig in der Herstellung und Montage und bietet darüber hinaus auch eine eher eingeschränkte Stabilität im Pumpbetrieb, da Einzelrohrelemente oft einfach nur zusammengesteckt bzw. zusammengeschraubt werden und sich an den Verbindungsstellen relativ leicht lösen können. Auch können solche Verrohrungen mit Standardrohrelementen nur bedingt kompakt genug gebaut werden, was die Montierbarkeit am Stück vor Ort eher erschwert.

Das deutsche Gebrauchsmuster DE 20 2006 000 564.1 beschreibt eine Einbauhalterung für Elemente einer Verrohrung einer Kläranlage, bei welcher ein horizontaler Trägerabschnitt und zumindest ein länglicher vertikaler Halteabschnitt vorgesehen sind, wobei an dam länglichen vertikalen Halteabschnitt einzelne Elemente der vertikal verlaufenden Verrohrung an einer oder mehreren Stellen entlang der vertikalen Richtung befestigbar sind. Diese Vorrichtung bietet bereits eine gegenüber dem übrigen Stand der Technik deutlich verbesserte Stabilität und auch eine einfachere Montierbarkeit, da diese Anordnung schon platzsparend im Vergleich zum Stand der Technik ausgeführt sein kann. Auch eine Vormontage der Verrohrung ist damit bereits möglich.

Das US-Patent US 2,864,317 beschreibt eine Pumpvorrichtung, bei welcher mehrere nach oben bzw. unten verlaufende Einzelröhren in einer umschließenden Röhre bzw. in einer oder mehreren muffenartigen umschließenden Röhren zusammengefasst sind, wobei dabei zwischen den einzelnen Röhren zusätzlich tote Hohlräume auftreten.

Ausgehend davon ist es die Aufgabe der vorliegenden Erfindung, eine Abpumpvorrichtung nach dem Druckluftheberprinzip für eine Kläranlage vorzusehen, mit einer Rohranordnung, welche die Nachteile des Stand der Technik überwindet, und insbesondere eine solche Vorrichtung vorzusehen, bei welcher auf konstruktiv einfache Weise eine hohe Stabilität bei gleichzeitiger einfacher Vormontierbarkeit und platzsparender Gestaltung möglich ist. Ebenso soll ein erfindungsgemäßes Verfahren zur Herstellung einer solchen Abpumpvorrichtung die genannten Vorteile bieten.

Die erfindungsgemäße Aufgabe wird gelöst durch ein Abpumpvorrichtung mit den Merkmalen gemäß Anspruch 1 sowie ein Verfahren zu deren Herstellung mit den Merkmalen gemäß Anspruch 10. Bevorzugte Ausführungsformen sind in den jeweiligen abhängigen Ansprüchen definiert.

Die Rohranordnung für eine Abpumpvorrichtung nach dem Druckluftheberprinzip für eine Kläranlage zum Abpumpen von Flüssigkeit und/oder Schlamm weist erfindungsgemäß in Flussrichtung gesehen zumindest ein erstes Steigrohr, ein erstes Senkrohr und ein zweites Steigrohr auf, wobei diese Rohre jeweils mit dem vorangehenden bzw. dem folgenden Rohr über Rohrverbindungsbereiche in Fluidverbindung stehen. Die Rohre sind dabei z.B. als gerade Rohre ausgeführt und die Rohrverbindungsbereiche sind dabei z.B. U-förmig ausgeführt. Erfindungsgemäß sind zumindest zwischen den beschriebenen Rohren Flanschverstrebungen vorgesehen, und diese Flanschverstrebungen sind dabei erfindungsgemäß jeweils über eine Länge von mindestens 50 % der jeweiligen Rohrlängen führend angeordnet. Das heißt, dass zwischen den jeweiligen Rohren (dem zumindest ersten Steigrohr, dem zumindest ersten Senkrohr und dem zumindest zweiten Steigrohr) über die Längen der entsprechenden Rohre dort dazwischen verbindend die erfindungsgemäßen Flanschverstrebungen so angeordnet sind, dass diese über eine Länge von mindestens 50 % der Länge der entsprechenden Rohre der Verrohrung diese dort erfindungsgemäß verbinden. Die Flanschabschnitte sind dabei zwischen den Rohren bevorzugt flach bzw. eben ausgeführt.

Mit der erfindungsgemäßen Gestaltung der vorgesehenen Flanschverstrebungen zwischen den Rohren der Rohranordnung kann auf konstruktiv einfache Weise eine hohe Stabilität der erfindungsgemäßen Rohranordnung für die erfindungsgemäße Abpumpvorrichtung vorgesehen werden, wobei dadurch die Vorrichtung mit der Rohranordnung einfach vormontierbar und besonders platzsparend ausgeführt ist.

Eine besonders hohe Stabilität der erfindungsgemäßen Rohranordnung ergibt sich, wenn die Flanschverstrebungen über die Längen der Rohre der Rohranordnung erfindungsgemäß bevorzugt jeweils im Wesentlichen durchgängig ausgebildet sind. Im Wesentlichen durchgängig bedeutet dabei, dass sich die Flanschverstrebungen über mehr als die Länge von mindestens 50 % der Rohrlänge erstrecken, nämlich bevorzugt über die gesamte Länge der entsprechenden, bevorzugt geraden, Rohrlänge zwischen den jeweiligen Rohren. Wie gesagt, kann dadurch die Stabilität der erfindungsgemäßen Rohranordnung weiter gesteigert sein.

Besonders stabil und in der Herstellung einfach sowie dadurch auch besonders kompakt ist eine zweckmäßige Ausführungsform der erfindungsgemäßen Rohranordnung der erfindungsgemäßen Vorrichtung, bei welcher die Rohre, die Rohrverbindungsbereiche und die Flanschverstrebungen einstückig ausgebildet sind. Dies erlaubt eine besonders kompakte Bauweise ohne zusätzliche Steckverbindungen, was auch die Montage der so bevorzugt gestalteten Vorrichtung erfindungsgemäß weiter vereinfacht.

Um die Handhabung der erfindungsgemäßen Vorrichtung weiter zu verbessern und um die Funktionalität der Vorrichtung weiter zu erhöhen, kann gemäß einer bevorzugten Ausführungsform der erfindungsgemäßen Vorrichtung zusätzlich eine Probenentnahmekammer mit einer Entnahmeöffnung vorgesehen sein, welche im oberen Bereich der Rohre der erfindungsgemäßen Vorrichtung so angeordnet ist, dass sie mit zumindest dem zweiten Steigrohr in dessen oberem Bereich in Fluidverbindung steht. Die so gestalteten Probenentnahmekammer kann insbesondere nach oben eine Öffnung aufweisen bzw. dort komplett offen sein, so dass ein Zugriff dort besonders leicht möglich ist und dort beispielsweise Wasserproben des durchlaufenden Wassers leicht entnommen werden können. Auch die Probenentnahmekammer kann entweder aufgesteckt oder einstückig bereits fertig mit der sonstigen erfindungsgemäßen Rohranordnung der Vorrichtung verbunden sein.

Bei der Rohranordnung der erfindungsgemäßen Vorrichtung kann zweckmäßig ein zusätzliches Druckluftrohr vorgesehen sein, welches im unteren Bereich des zweiten Steigrohrs in dieses mündet, wobei auch zwischen dem Druckluftrohr und zumindest dem zweiten Steigrohr eine durchgängige Flanschverstrebung besteht und wobei bevorzugt auch eine durchgängige Flanschverstrebung zwischen dem Druckluftrohr und dem ersten Steigrohr besteht. Insbesondere bevorzugt kann die so ausgebildete Abpumpvorrichtung einstückig ausgebildet sein. Durch die zusätzliche Flanschverbindung des Druckluftrohrs kann erfindungsgemäß die so vorgenommene Gestaltung der Abpumpvorrichtung nach dem Druckluftheberprinzip besonders einfach und kostengünstig gestaltet werden. Es ist somit erfindungsgemäß nicht erforderlich, dass beispielsweise zusätzliche Schlauchverbindungen für den Anschluss eines Druckluftschlauchs im Wasserbereich der Rohranordnung vorgesehen sein müssen. Vielmehr kann die Druckluftquelle im entsprechenden oberen Endbereich der so bevorzugt erfindungsgemäß vorgesehenen Druckluftrohrs einfach außerhalb des Behälters, in welchem sich die gesamte Vorrichtung ansonsten befindet, dort verbunden sein.

Die Stabilität der Vorrichtung mit der erfindungsgemäßen Rohranordnung kann weiter dadurch erhöht sein, dass die jeweiligen Rohre einen von einer Kreisform abweichenden Querschnitt aufweisen, bevorzugt einen konischen Querschnitt oder einen elliptischen oder im Wesentlichen elliptischen Querschnitt aufweisen. Dies erlaubt auch eine möglichst flache Gestaltung der Rohre, was beim Einbau einen entsprechend weiter verringerten Platzbedarf der so erfindungsgemäß bevorzugt gestalteten Vorrichtung ergibt.

Um die Herstellung der erfindungsgemäßen Vorrichtung möglichst einfach gestalten zu können und um die Stabilität und die Korrosionsbeständigkeit der erfindungsgemäßen Vorrichtung im besonderen Maße zu gewährleisten, kann die erfindungsgemäße Vorrichtung zweckmäßigerweise beispielsweise aus Kunststoffmaterial bestehen.

Insbesondere bevorzugt kann die erfindungsgemäße Vorrichtung bzw. die entsprechende erfindungsgemäße Rohranordnung der Vorrichtung durch Rotationsformen oder Blasformen ausgebildet sein. Dies wird im Folgenden noch weiter beschrieben werden.

Die Erfindung betrifft neben der eigentlichen Vorrichtung auch ein Verfahren zur Herstellung einer Rohranordnung bzw. einer Abpumpvorrichtung nach dem Druckluftheberprinzip für eine Kläranlage zum Abpumpen von Flüssigkeit und/oder Schlamm mit einer solchen Rohranordnung, wobei die Rohranordnung in Flussrichtung zumindest ein erstes Steigrohr, ein erstes Senkrohr und ein zweites Steigrohr aufweist, welche mit dem in Flussrichtung jeweils vorangehenden bzw. folgenden Rohr über Rohrverbindungsbereiche in Fluidverbindung stehen, wobei zwischen den Rohren Flanschverstrebungen vorgesehen werden und die Flanschverstrebungen jeweils über eine Länge von mindestens 50 % von jeweiligen Rohrlängen führend angeordnet werden, wobei das erfindungsgemäße Verfahren die folgenden Schritte aufweist:
- Herstellung einer Hohlform der Rohranordnung, insbesondere wie oben beschrieben,
- Befüllen der Hohlform mit Pulver eines Kunststoffmaterials, aus welchem die Rohranordnung der Abpumpvorrichtung hergestellt wird,
- taumelnde Rotationsbewegung der Hohlform mit dem darin befindlichen Kunststoffmaterial,
- Heizen der Hohlform unter andauemder taumelnder Rotationsbewegung, so dass das Pulver des Kunststoffmaterials schmilzt und sich die Schmelze an die Innenwandung der Hohlform anlegt,
- Abkühlen der Hohlform,
- Öffnen der Hohlform und Entnahme der Rohranordnung für die Abpumpvorrichtung.

Die Merkmale und Vorteile der erfindungsgemäßen Vorrichtung sollen entsprechend, soweit anwendbar, auch bezüglich des erfindungsgemäßen Verfahrens gelten und umgekehrt.

Bei dem erfindungsgemäßen Verfahren wird also eine einheitliche Rohranordnung für eine Abpumpvorrichtung erfindungsgemäß erzeugt, wobei durch das entsprechende Rotationsformen erfindungsgemäß auf einfache Weise eine konstruktiv möglichst einfache Vorrichtung erzeugt werden kann. Insbesondere ist es dadurch möglich, die Rohranordnung mit den dazwischen verlaufenden Flanschverstrebungen beispielsweise bevorzugt einstückig herstellen zu können. Durch die Verwendung von Kunststoffmaterial, zum Beispiel PET, ist eine besonders kostengünstige, stabile und flexibel zu gestaltende Vorrichtung herstellbar.

Die Erfindung wird im Folgenden anhand der beigefügten Figuren näher beispielhaft erläutert werden. Es zeigen:
Fig. 1 eine perspektivische schematische Ansicht einer Abpumpvorrichtung gemäß einer bevorzugten Ausführungsform der Erfindung;
Fig. 2 eine schematische Schnittansicht entlang dem Schnitt A - A in Fig.1;
Fig. 3 eine perspektivische schematische Ansicht einer Abpumpvorrichtung gemäß einer weiteren bevorzugten Ausführungsform der Erfindung; und
Fig. 4 eine auseinander gezogene perspektivische schematische Ansicht einer Abpumpvorrichtung gemäß der weiteren bevorzugten Ausführungsform der Erfindung.

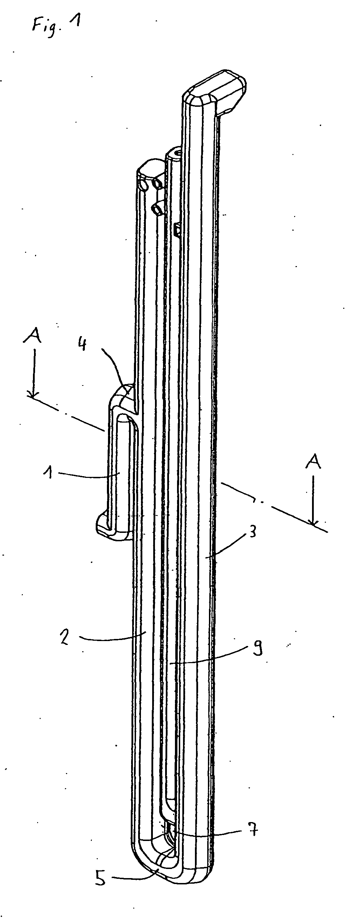

Die Fig. 1 zeigt schematisch eine perspektivische Ansicht einer Abpumpvorrichtung mit einer Rohranordnung gemäß einer bevorzugten Ausführungsform der Erfindung.

Die gezeigte Rohranordnung ist vorgesehen als eine Abpumpvorrichtung nach dem Druckluftheberprinzip für eine Kläranlage zum Abpumpen von Flüssigkeit und/oder Schlamm. Die gezeigte Rohranordnung weist zumindest in Flussrichtung ein erstes Steigrohr 1, ein erstes Senkrohr 2 und ein zweites Steigrohr 3 auf, welche mit dem in Flussrichtung jeweils vorangehenden bzw. Rohr jeweils über Rohrverbindungsbereiche 4, 5 in Fluidverbindung stehen. Die Rohrverbindungsbereiche 4, 5 sind dabei U-förmig ausgebildet und integral Bestandteil der gemäß Fig. 1 einstückig ausgebildeten Rohranordnung 1, 2, 3 und 9. Bei der in Fig. 1 gezeigten Rohranordnung ist ein zusätzliches Druckluftrohr 9 vorgesehen, welches im unteren Bereich des zweiten Steigrohrs 3 in dieses mündet, wobei zwischen dem Druckluftrohr 9 und dem zumindest zweiten Steigrohr 3 eine durchgängige Flanschverstrebung 10 vorgesehen ist und auch zwischen dem Druckluftohr 9 und dem ersten Senkrohr 2 eine durchgängige Flanschverstrebung 11 vorgesehen ist. Zwischen den Rohren 1, 2, 3, 9 sind also Flanschverstrebungen 6, 7, 10, 11 vorgesehen, wobei diese Flanschverstrebungen 6, 7, 10, 11 jeweils über eine Länge von mindestens 50 % der jeweiligen Rohrlängen führend angeordnet sind. In der in Fig. 1 gezeigten bevorzugten Ausführungsform der Erfindung sind die Flanschverstrebungen sogar jeweils über die gesamte Länge der Rohre laufend ausgeführt. Dies ergibt eine besonders hohe Stabilität der erfindungsgemäßen Vorrichtung. Die erfindungsgemäßen Flanschverstrebungen verlaufen, wie in Fig. 1 zu sehen, im Bereich der Ebene der Anordnung der Rohre jeweils zwischen diesen Rohren. Die Ausführungsform der Rohranordnung gemäß Fig. 1 ist dabei einstückig mit den Rohren und den dazwischen befindlichen Flanschverstrebungen ausgeführt.

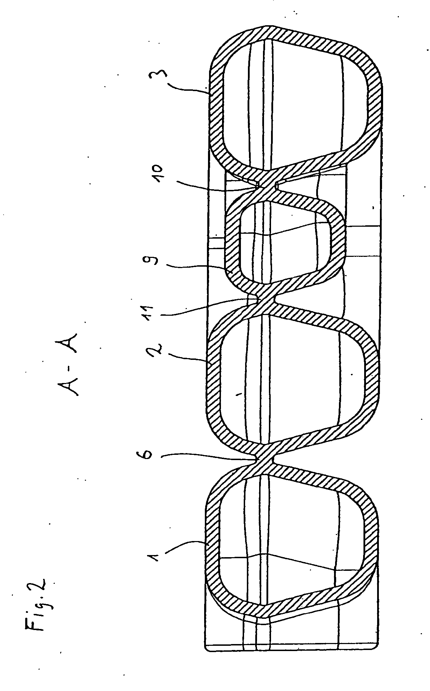

Die Fig. 2 zeigt eine schematische Schnittansicht entlang des Schnittes A-A in Fig. 1.

Wie im Schnitt der Fig. 2 gut zu erkennen ist, weisen die Rohre 1, 2, 3, 9 der Rohranordnung bevorzugt von einer Kreisform abweichende Querschnitte auf, hier bevorzugt elliptische bzw. im Wesentlichen elliptische Querschnitte auf, was die Stabilität der Anordnung somit bevorzugt weiter erhöht. Die Flanschverstrebungen 6, 10, 11, wie allgemein alle erfindungsgemäßen Flanschverstrebungen, laufen zwischen den Rohren jeweils in einer gemeinsamen Ebene und sind dabei auch in einer Ebene angeordnet, welche zwischen den Rohren sich befindet und welche dort verläuft, wo die Anordnung der im wesentlichen elliptischen Rohre mit ihren jeweils größeren Durchmessern nebeneinander vorgegeben ist. Wie im Schnitt der Fig. 2 ebenfalls ersichtlich ist, sind auch die Rohrverbindungsbereiche zwischen den längs verlaufenden Rohren der erfindungsgemäßen Rohranordnung einstückig mit dieser Rohranordnung ausgebildet.

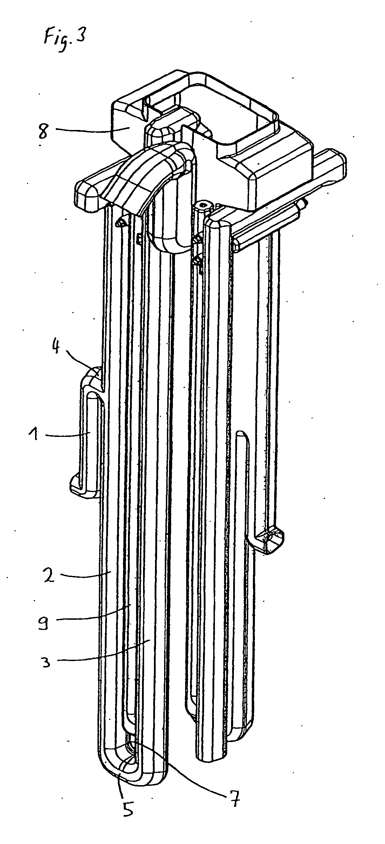

Die Fig. 3 zeigt schematisch eine perspektivische Ansicht einer Abpumpvorrichtung mit einer Rohranordnung gemäß einer weiteren bevorzugten Ausführungsform der Erfindung.

Die Abpumpvorrichtung mit der Rohranordnung gemäß Fig. 3 unterscheidet sich von der Vorrichtung der Figur im Wesentlichen nur dadurch, dass gemäß der Darstellung der Fig. 3 zwei erfindungsgemäße Abpumpvorrichtungen als Baueinheit miteinander verbunden dargestellt sind und zusätzlich eine Probenentnahmekammer 8 vorgesehen ist, welche im oberen Bereich der Rohre 1, 2, 3, 9 so angeordnet ist, dass sie mit dem zweiten Steigrohr 3 in dessen oberem Bereich in Fluidverbindung steht. Die übrigen Elemente der Darstellung der Fig. 3 mit den dortigen Bezugszeichen entsprechen den jeweiligen Elementen mit den gleichen Bezugszeichen gemäß der Darstellung der Fig. 1.

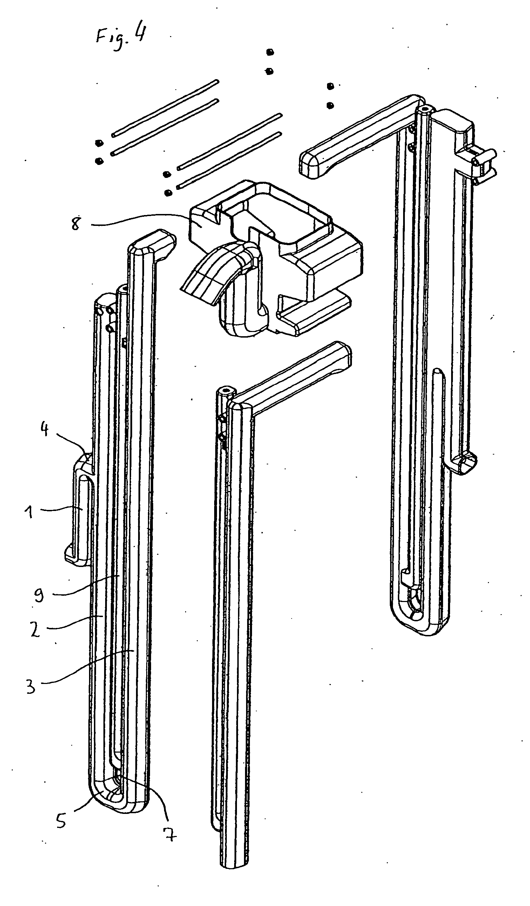

Die Fig. 4 zeigt schematisch eine auseinandergezogene perspektivische Ansicht der Abpumpvorrichtung mit der Rohranordnung gemäß der weiteren bevorzugten Ausführungsform der Erfindung, wie sie bereits in Fig. 3 dargestellt ist. Gut zu erkennen ist dabei, dass die Abpumpvorrichtung mit der erfindungsgemäßen Rohranordnung mit zwei weiteren entsprechenden Verrohrungsanordnungen über Gewindestangen und Muttern zusammengesteckt ist, wobei die Gewindestangen durch jeweilige Öffnungen in den Rohranordnungen verlaufen. Die Probenentnahmekammer 8 ist dabei zwischen horizontal verlaufenden Rohrabschnitten der jeweiligen Rohranordnungen eingeklemmt. Die jeweiligen weiteren Rohranordnungen weisen dabei ebenfalls die von der Rohranordnung 1, 2, 3, 9 ff. bekannten Flanschverstrebungen auf.

Die Vorrichtung gemäß der Erfindung kann mit ihrer Rohranordnung nach dem erfindungsgemäßen Rotationsformungsverfahren hergestellt werden oder nach dem ähnlichen Blasformverfahren. Entsprechend ist dabei erfindungsgemäß eine Hohlform der Rohranordnung herzustellen, welche mit einem Kunststoffmaterial gefüllt wird. Im Fall des Rotationsformens wird dann erfindungsgemäß in einer taumelnden Rotationsbewegung das Kunststoffmaterial in die aufgeheizte Hohlform verteilt, wobei es sich an die Innenwandung der Hohlform anlegt. Beim Blasformen wird dieser Vorgang des Anlegens des Kunststoffmaterials durch Druckaufbau durch Zufuhr von Gas unter Druck in die Hohlform erreicht. Nach Abkühlen und Öffnen der Hohlform kann die entsprechende Rohranordnung dann entnommen werden.

## Patentansprüche

1. Abpumpvorrichtung nach dem Druckluftheberprinzip für eine Kläranlage zum Abpumpen von Flüssigkeit und/oder Schlamm mit einer Rohranordnung (1, 2, 3, 9), mit zumindest in Flussrichtung einem ersten Steigrohr (1), einem ersten Senkrohr (2) und einem zweiten Steigrohr (3), welche mit dem in Flussrichtung jeweiligen vorangehenden beziehungsweise folgenden Rohr über Rohrverbindungsbereiche (4, 5) in Fluidverbindung stehen,
**dadurch gekennzeichnet, dass**
zwischen den Rohren (1, 2, 3, 9) Flanschverstrebungen (6, 7, 10, 11) vorgesehen sind und die Flanschverstrebungen (6, 7, 10, 11) jeweils über eine Länge von mindestens 50% von jeweiligen Rohrlängen führend angeordnet sind.

2. Vorrichtung nach Anspruch 1, **dadurch gekennzeichnet, dass** die Flanschverstrebungen (6, 7, 10, 11) über die Längen jeweils im Wesentlichen durchgängig ausgebildet sind.

3. Vorrichtung nach Anspruch 1 oder 2, **dadurch gekennzeichnet, dass** die Rohre (1, 2, 3, 9), die Rohrverbindungsbereiche (4, 5) und die Flanschverstrebungen (6, 7, 10, 11) einstückig ausgebildet sind.

4. Vorrichtung nach einem der Ansprüche 1 bis 3, **dadurch gekennzeichnet, dass** eine Probenentnahmekammer (8) mit einer Entnahmeöffnung vorgesehen ist, welche im oberen Bereich der Rohre (1, 2, 3, 9) so angeordnet ist, dass sie mit dem zweiten Steigrohr (3) in dessen oberen Bereich in Fluidverbindung steht.

5. Vorrichtung nach einem der Ansprüche 1 bis 4, **dadurch gekennzeichnet, dass** ein zusätzliches Druckluftrohr (9) vorgesehen ist, welches im unteren Bereich des zweiten Steigrohrs (3) in dieses mündet, wobei auch zwischen dem Druckluftrohr (9) und zumindest dem zweien Steigrohr (3) eine durchgängige Flanschverstrebung (10) besteht, und bevorzugt auch eine durchgängige Flanschverstrebung (11) zwischen dem Druckluftrohr (9) und dem ersten Senkrohr (2) besteht, und wobei besonders bevorzugt die so ausgebildete Abpumpvorrichtung einstückig ausgebildet ist.

6. Vorrichtung nach einem der Ansprüche 1 bis 5, **dadurch gekennzeichnet, dass** die Rohre (1, 2, 3, 9) einen von einer Kreisform abweichenden Querschnitt aufweisen, bevorzugt einen konischen Querschnitt oder einen elliptischen oder im Wesentlichen elliptischen Querschnitt aufweisen.

7. Vorrichtung nach einem der Ansprüche 1 bis 6, **dadurch gekennzeichnet, dass** die Flanschverstrebungen (6, 7) auch im Bereich der Rohrverbindungsbereiche (4, 5) ausgebildet sind.

8. Vorrichtung nach einem der Ansprüche 1 bis 7, **dadurch gekennzeichnet, dass** die Abpumpvorrichtung aus Kunststoffmaterial besteht.

9. Vorrichtung nach einem der Ansprüche 1 bis 8, **dadurch gekennzeichnet, dass** die Abpumpvorrichtung durch Rotationsformen oder Blasformen ausgebildet ist.

10. Verfahren zur Herstellung einer Abpumpvorrichtung nach dem Druckluftheberprinzip für eine Kläranlage zum Abpumpen von Flüssigkeit und/oder Schlamm mit einer Rohranordnung, mit in Flussrichtung zumindest einem ersten Steigrohr, einem ersten Senkrohr und einem zweiten Steigrohr, welche mit dem in Flussrichtung jeweiligen vorangehenden beziehungsweise folgenden Rohr über Rohrverbindungsbereiche in Fluidverbindung stehen, wobei zwischen den Rohren Flanschverstrebungen vorgesehen werden und die Flanschverstrebungen jeweils über eine Länge von mindestens 50% von jeweiligen Rohrlängen führend angeordnet werden, mit den folgenden Schritten:
- Herrstellung einer Hohlform der Rohranordnung,
- Befüllen der Hohlform mit Pulver eines Kunststoffmaterials, aus welchem die Rohranordnung der Abpumpvorrichtung hergestellt wird,
- taumelnde Rotationsbewegung der Hohlform mit dem darin befindlichen Kunststoffmaterial,
- Heizen der Hohlform unter andauernder taumelnder Rotationsbewegung, so dass das Pulver des Kunststoffmaterials schmilzt und sich die Schmelze an die Innenwandung der Hohlform anlegt,
- Abkühlen der Hohlform.
- Öffnen der Hohlform und Entnahme der Rohranordnung der Abpumpvorrichtung.

## Claims

1. Pump device using the air-lift pump principle for a sewage treatment plant in order to pump fluid and/or sludge, having a pipe arrangement (1, 2, 3, 9), having - at least in the flow direction - a first ascending pipe (1), a first descending pipe (2), and a second ascending pipe (3), which stand in fluid connection with the applicable preceding or following pipe in the flow direction via pipe connection regions (4, 5),
**characterized in that**
flange braces (6, 7, 10, 11) are provided between the pipes (1, 2, 3, 9), and the flange braces (6, 7, 10, 11) are each arranged to lead over a length of at least 50% of the applicable pipe lengths.

2. Device according to claim 1, **characterized in that** the flange braces (6, 7, 10, 11) are each designed to be essentially continuous over the lengths.

3. Device according to claim 1 or 2, **characterized in that** the pipes (1, 2, 3, 9), the pipe connection regions (4, 5), and the flange braces (6, 7, 10, 11) are implemented as a single piece.

4. Device according to any one of claims 1 to 3, **characterized in that** a sampling chamber (8) is provided with a sampling opening that is arranged in the upper region of the pipes (1, 2, 3, 9) in such a manner that it stands in fluid connection with the upper region of the second ascending pipe (3).

5. Device according to any one of claims 1 to 4, **characterized in that** an additional air pipe (9) is provided that opens into the lower region of the second ascending pipe (3), wherein a continuous flange brace (10) also exists between the air pipe (9) and at least the second ascending pipe (3), and preferably a continuous flange brace (11) also exists between the air pipe (9) and the first descending pipe (2), and wherein the pump device thus designed is especially preferably implemented as a single piece.

6. Device according to any one of claims 1 to 5, **characterized in that** the pipes (1, 2, 3, 9) have a cross-section deviating from a circular shape, preferably have a conical cross-section or an elliptical or largely elliptical cross-section.

7. Device according to any one of claims 1 to 6, **characterized in that** the flange braces (6, 7) are also implemented in the region of the pipe connection regions (4, 5).

8. Device according to any one of claims 1 to 7, **characterized in that** the pump device is made of plastic material.

9. Device according to any one of claims 1 to 8, **characterized in that** the pump device is made by rotational molding or blow molding.

10. Method for manufacturing a pump device using the air-lift pump principle for a sewage treatment plant in order to pump fluid and/or sludge, having a pipe arrangement, having - in the flow direction - at least one first ascending pipe, a first descending pipe, and a second ascending pipe, which stand in fluid connection with the applicable preceding or following pipe in the flow direction via pipe connection regions, wherein flange braces are provided between the pipes, and the flange braces are each arranged to lead over a length of at least 50% of the applicable pipe lengths, having the following steps:
- manufacture of a hollow mold for the pipe arrangement,
- filling of the hollow mold with powder of a plastic material from which the pipe arrangement of the pump device is manufactured,
- tumbling rotational motion of the hollow mold with the plastic material located therein,
- heating of the hollow mold with continuous tumbling rotational motion so that the powder of the plastic material melts and the melt adheres to the inner wall of the hollow mold,
- cooling of the hollow mold,
- opening of the hollow mold and removal of the pipe arrangement of the pump device.

## Revendications

1. Dispositif de pompage selon le principe du levage à air comprimé pour une station d'épuration pour pomper du liquide et/ou de la boue comportant un agencement de tuyaux (1, 2, 3, 9) avec, dans le sens de l'écoulement, au moins une première conduite montante (1), une première conduite descendante (2) et une deuxième conduite montante (3) qui est en liaison d'écoulement avec la conduite précédente ou suivante dans le sens de l'écoulement par des zones de connexions tubulaires (4, 5),
**caractérisé en ce que**
des entretoises en forme de bride (6, 7, 10, 11) sont prévues entre les tuyaux (1, 2, 3, 9) et les entretoises en forme de bride (6, 7, 10, 11) sont agencées de manière à être conductrices sur une longueur d'au moins 50% des longueurs respectives des tuyaux.

2. Dispositif selon la revendication 1, **caractérisé en ce que** les entretoises en forme de bride (6, 7, 10, 11) sont conçues pour être sensiblement passantes sur leur longueur respective.

3. Dispositif selon la revendication 1 ou 2, **caractérisé en ce que** les tuyaux (1, 2, 3, 9), les zones de connexions tubulaires (4, 5) et les entretoises en forme de bride (6, 7, 10, 11) sont monobloc.

4. Dispositif selon la revendication 1 à 3, **caractérisé en ce qu'**une chambre de prélèvement d'échantillons (8) avec une ouverture de prélèvement est prévue qui est disposée dans la partie supérieure des tuyaux (1, 2, 3, 9) de telle façon qu'elle est en liaison d'écoulement avec la deuxième conduite montante (3) dans sa partie supérieure.

5. Dispositif selon la revendication 1 à 4 **caractérisé en ce qu'**un tuyau à air comprimé supplémentaire (9) est prévu qui débouche dans la partie inférieure de la deuxième conduite montante (3) et entre le tuyau à air comprimé (9) et au moins la deuxième conduite montante (3), se trouve une entretoise en forme de bride passante (10) et de manière préférée également une entretoise en forme de bride passante (11) entre le tuyau à air comprimé (9) et la première conduite descendante (2) et de manière plus préférée le dispositif de pompage ainsi formé est monobloc.

6. Dispositif selon la revendication 1 à 5, **caractérisé en ce que** les tuyaux (1, 2, 3, 9) ont une section de forme non circulaire, de préférence une section de forme conique ou elliptique ou sensiblement elliptique.

7. Dispositif selon la revendication 1 à 6, **caractérisé en ce que** les entretoises en forme de bride (6, 7) sont formées aussi dans la zone des connexions tubulaires (4, 5).

8. Dispositif selon la revendication 1 à 7, **caractérisé en ce que** le dispositif de pompage est en matière plastique.

9. Dispositif selon la revendication 1 à 8, **caractérisé en ce que** le dispositif de pompage est formé au moyen de moules de rotation ou de soufflage.

10. Procédé de fabrication d'un dispositif de pompage selon le principe de levage à air comprimé pour une station d'épuration pour pomper du liquide et/ou de la boue comportant un agencement de tuyaux avec, dans le sens de l'écoulement, au moins une première conduite montante, une première conduite descendante et une deuxième conduite montante qui sont en liaison d'écoulement avec la conduite précédente ou suivante dans le sens de l'écoulement par des zones de connexions tubulaires, des entretoise en forme de bride étant prévues entre les tuyaux et les entretoises en forme de bride étant conductrices sur une longueur d'au moins 50% des longueurs respectives des tuyaux, comportant les étapes suivantes :
- fabrication d'un moule creux pour l'agencement de tuyaux
- remplissage du moule creux avec une poudre de matière plastique pour fabriquer l'agencement tubulaire du dispositif de pompage
- mouvement de rotation oscillant du moule creux avec la matière plastique se trouvant à l'intérieur
- chauffage du moule creux sous un mouvement de rotation oscillant constant de sorte que la poudre de matière plastique fonde et que le matériau de fusion épouse les parois intérieures du moule
- refroidissement du moule creux
- ouverture du moule creux et retrait de l'agencement tubulaire pour dispositif de pompage.
